# EUROPÄISCHE PATENTSCHRIFT

(11) **EP 1 849 844 B1**
(45) Veröffentlichungstag und Bekanntmachung des Hinweises auf die Patenterteilung: **28.12.2011**
(21) Anmeldenummer: 07007852.2
(22) Anmeldetag: 18.04.2007
(51) Int. Cl.: C09J 7/00

(54) **Modifizierter polymerer Kunststoff, Verfahren zu dessen Herstellung und dessen Verwendung**
Modified polymer plastic, method for its production and application
Plastique en polymère modifié, son procédé de fabrication et son utilisation

(30) Priorität: 26.04.2006 DE 102006020111
(43) Veröffentlichungstag der Anmeldung: 31.10.2007
(60) Teilanmeldung: 10006945.9
(73) Patentinhaber: Innovent e.V. Technologieentwicklung, 07745 Jena (DE)
(72) Erfinder: Heft, Andreas, 07545 Gera (DE); Pfuch, Andreas, 99510 Apolda (DE); Schimanski, Arnd, 44329 Dortmund (DE); Grünler, Bernd, 07937 Zeulenroda (DE)
(74) Vertreter: Donath, Dirk

(56) Entgegenhaltungen:
- EP-A1- 0 094 121
- US-A- 4 942 119

## Beschreibung

Bestimmte nanostrokturierte Materialien, zum Beispiel Zeolithe, besitzen die Eigenschaft, kleinere Moleküle in sich aufzunehmen. Damit eignen sie sich hervorragend als Adsorptionsmittel. Sie können so synthetisiert werden, dass ihre Hohlräume und Zugangsöffnungen einen vorher definierten Durchmesser besitzen, durch welche dann nur Moleküle mit passender Struktur und Gestalt eindringen können, um daraufhin in den Hohlräumen durch elektrostatische oder von-der-Waals-Kräfte festgehalten zu werden. Die Moleküle, die sich im Inneren der Hohlräume befinden, können zum Beispiel Farbstoffmoleküle, im speziellen organische und photoaktiviert schaltbare Farbstoffmoleküle sein, welche innerhalb der Nanozeolithe synthetisiert oder in sie eingebracht werden.

Aus US 4,942,119 ist das Einbringen von Silber-Sodalith Materialien mit 10 Massen % in an sich transparentes PMMA bekannt.

In Abhängigkeit von der Zusammensetzung dieser PMMA- Silber-Sodalith-Mischung und der Größe der ¨Silber-Sodalith- Partikel sind die Silber-Sodalith- Partikel sichtbar, so dass die gemäß US 4,942,119 modifizierten PMMA, in ihrem ursprünglichen Zustand weiß sind und ihre Färbung in Folge der Einstrahlung von Laserlicht, insbesondere UV-Laserlicht, von grau über helleres grau bis hin zu orange und gelb verändern.

Der Nachteil dieser PMMA- Silber-Sodalith-Mischungen ist, dass sie im sichtbaren Bereich des elektromagnetischen Spektrums nicht transparent sind und eine Transmissionsverringerung dieser Mischungen durch UV-Laserlicht erfolgt, was eine Verwendung als photoaktiviert schaltbare Elemente unter dem Einfluss von Tageslicht oder gängigen Kunstlicht ausschließt.

Die Aufgabe der vorliegenden Erfindung besteht darin, einen modifizierten polymeren Kunststoff anzugeben, der die Nachteile von US 4,942,119 vermeidet, insbesondere im sichtbaren Bereich des elektromagnetischen Spektrums zunächst transparent ist und nach Bestrahlung mittels UV-Licht bzw. kurzwelligen sichtbaren Lichtes wellenlängenabhängig deutliche Transmissionsverringerungen aufweist.

Diese Aufgabe wird durch einen modifizierten polymeren Kunststoff gemäß Anspruch 1 gelöst. Vorteilhafte Ausgestaltungen werden in den nachgeordneten Ansprüchen angegeben.

Durch das erfindungsgemäße Einbringen von derartigen Nanozeolithen, die sich dadurch auszeichnen, dass sich in den beschriebenen Nanoteilchen organische photoaktiviert schaltbare Farbstoffmoleküle befinden, in eine im sichtbaren Wellenlängenbereich bevorzugt transparente Kunststoffmatrix lassen sich photochrom schaltbare Kunststoffe herstellen.

Diese können als Folien, als planare Substrate oder in komplexeren Formen weitere Verwendung finden.

Bisher existieren verschiedene Ansätze zu Herstellung schaltbarer Glasscheiben (elektrochrom, photochrom, photoelektrochrom, gasochrom, thermotrop). Diese sind jedoch trotz langwieriger und intensiver Entwicklungsarbeiten bisher nicht zur Marktreife gebracht worden. Ursache dafür sind die unzureichende Lösung grundlegender Fragen, wie die Komplexizität der Schichtaufbauten insbesondere bei großflächigen Systemen (elektrochrom, photoelektrochrom), bestehende Probleme hinsichtlich der Steuerung (gasochrom) oder auch nicht ausreichende Schaltzeiten und Temperatureinflüsse. Insbesondere für (Wolframoxid-basierte) photochrome Systeme werden verschiedene Umstände wie die starke Temperaturabhängigkeit der Ein- bzw. Entfärbung, mangelnde Langzeitstabilität, hoher Absorptionsgrad im abgedunkelten Zustand und hohe Preise als Umstände angeführt, welche den Einsatz großformatiger Gläser in der Architektur verhindern. Die Herstellung der f-NZ-modifizierten Folien (f-NZ = farbstoffmodifizierte Nanozeolithe) und das Laminieren sind dagegen sehr preiswerte Verfahren. Durch Variationen des f-NZ-Gehalts in den Folien wird die Transmissionsänderung durch Bestrahlung gezielt eingestellt und damit die Schaltungsleistung der Scheiben definiert. Da die Folien typischen Dicken von einigen hundert Mikrometern und mehr aufweisen, stellt auch eine mögliche elektrische Kontaktierung von Folienverbünden kein Problem dar.

Erfindungsgemäß werden Kunststoffe, welche vorzugsweise transparent sind, mit einem Anteil an farbstoffmodifizierten Nanozeolithen (f-NZ) modifiziert, um daraus Folien herzustellen. Dies geschieht bspw. durch das Extrudieren von Granulaten oder Pulvern mit den entsprechenden Zusätzen an f-NZ, wobei der Gewichtsanteil der f-NZ typischerweise unter 30% liegt, vorzugsweise werden Anteile von weniger als 20% eingebracht. Durch Bestrahlung derartig hergestellter Folien mittels kurzwelligen sichtbaren Lichtes oder UV-Lichtes kann die Transmission wellenlängenabhängig reduziert werden.

Erfindungsgemäß kann die Folienherstellung auch durch einen Koextrusionsprozess verschiedener Kunststoffmaterialien erfolgen, wobei dem Granulat oder dem Pulver mindestens eines der verwendeten Kunststoffe Anteile von f-NZ zugesetzt werden.

Erfindungsgemäß können derartig hergestellte Folien auf gebräuchliche Folien auflaminiert werden, die in der späteren Verwendung als Laminierfolien für Verbundsicherheitsglas dienen.

Die Verwendung der so hergestellten, mit f-NZ modifizierten Folien zum Laminieren von Gläsern und Kunststoffplatten stellt eine erfindungsgemäße Anwendung dar. Dabei werden sowohl Verbundgläser, bei denen zwei oder mehrere Scheiben mit dazwischen liegenden Folien laminiert werden (Verbundsicherheitsglas, VSG) als auch oberflächlich laminierte Gläser oder Kunststoffplatten hergestellt.

Damit ist eine Funktionalisierung des Glases bzw. Glasverbundes oder von Kunststoffplatten möglich, welche mit den bisher eingesetzten CVD- und PVD-Beschichtungstechnologien nicht oder nur mit deutlich höherem Aufwand realisiert werden können.

Insbesondere werden Polyvinylbutyral- (PVB-) Folien mit den f-NZ modifiziert, da dieser Kunststoff in der Herstellung von Verbundgläsern nahezu ausschließlich verwendet wird. Dort, wo die Sicherheitsanforderungen an das Verbundglas die Verwendung der PVB-Folien nicht zwingend erforderlich machen, sind auch andere f-NZ-modifizierte Kunststoffe einsetzbar.

Kern der Erfindung ist ein modifizierter polymerer Kunststoff, dadurch gekennzeichnet, dass in die Polymermatrix eine Menge von wenigen Massenprozent (≤ 30%), bevorzugt von weniger als 20%, an f-NZ derart eingebracht werden, dass daraus hergestellte Folien erfindungsgemäß im sichtbaren Bereich des elektromagnetischen Spektrums zunächst transparent sind und nach Bestrahlung mittels UV-Licht bzw. kurzwelligen sichtbaren Lichtes (Tageslicht) wellenlängenabhängig deutliche Transmissionsverringerungen aufweisen. Die Dicke dieser Folien liegt im Bereich von 1 µm bis hin zu einigen Millimetern, wobei dickere Folien auch durch Laminieren mehrerer dünnerer Folien erzeugt werden. Als Materialien für die Folien werden alle thermoplastisch verformbaren Polymerstoffe verwendet, bevorzugt solche mit guter Laminierfähigkeit und hoher Festigkeit wie PVB.

Um die Langzeitstabilität der Farbstoffmoleküle zu erhöhen bzw. um die f-NZ besser in die Polymermatrix einbinden zu können, werden diese entsprechend gekapselt bzw. vorbehandelt. Dies geschieht mit Verfahren der physikalischen und/oder chemischen Gasphasenabscheidung (PVD, CVD), Sol-Gel-Prozessen und anderen Verfahren der Flüssigphasenbeschichtung. Diese Vorbehandlung findet entweder unter Atmosphärendruckbedingungen statt oder unter Vakuumbedingungen. Dies schließt auch Verfahren wie die flammengestützte Pyrolyse (CCVD) und die flammengestützte Hydrolyse (r-CCVD) ein. Die Vorbehandlung erfolgt auch mit Stoffen, welche die Elemente Silizium, Titan, Aluminium, Zinn, Wolfram, Tantal, Cer, Molybdän, Zink, Zirkon, Silber, Niob, Indium, Arsen, Selen, Antimon, Fluor und Chlor enthalten sowie mit Sauerstoff, Stickstoff, Argon, Wasserstoff, Chlor und Fluor oder Gemischen aus diesen Gasen.

Erfindungsgemäß werden die mit f-NZ modifizierten Polymere als komplexe Körper (z. B. Behälter), die bspw. durch Spritzguss hergestellt wurden, selbst weiterverarbeitet oder auf ein Substrat, welches aus Glas in jedweder Form und Zusammensetzung oder aus einem transparenten Kunststoff jedweder Form und Zusammensetzung besteht, aufgebracht. Bevorzugt werden flache Substrate wie Floatglasscheiben oder Kunststoffplatten bzw. -folien oder Hohlkörper aus Glas oder Kunststoff. Das Aufbringen der modifizierten Polymere erfolgt durch alle gängigen Auftragstechniken, insbesondere durch Aufextrudieren, Aufblasen oder Auflaminieren.

Für den Aufbau von Verbunden werden einzelne oder mehrere modifizierte Polymerfolien zwischen zwei Substraten laminiert. Der Aufbau aus mehreren Abfolgen von Substraten und modifizierten Folien ist ebenso erfindungsgemäß wie die Abfolge mehrerer Folien mit unterschiedlichen Modifikationen (z. B. Folien mit elektrischer Leitfähigkeit und schaltbarer Transmission) innerhalb eines solchen Verbundes.

### Ausführungsbeispiel 1

Einbringen von oberflächenvorbehandelten f-NZ in Polyethylen (PE) dadurch, dass PE-Pulver (mittlere Korngröße ca. 300 µm) mit 0,5 Massen % f-NZ vermischt und anschließend bei Temperaturen nicht höher als 250°C extrudiert wurde. Dabei wurde eine Folie erzeugt, welche klar und transparent ist. Bei heller Lichtbestrahlung erfolgt eine deutlich wahrnehmbare Einfärbung dieser Folie.

### Ausführungsbeispiel 2

Einbringen von oberflächenvorbehandelten f-NZ in Polyvinylbutyral (PVB) dadurch, dass PVB in Isopropanol gelöst wurde und diese Lösung mit 0,5 Massen % f-NZ versetzt wurde. Durch Aufbringen dieser Lösung auf eine Glasscheibe und das anschließende Aufbringen einer weiteren Glasscheibe nach dem Eintrocknen dieser Lösung wurde unter Druck und bei ca. 130°C ein Verbundglas hergestellt, bei dem sich die schaltbare Polymerschicht als dünne Folie zwischen den beiden Glasplatten befindet und dadurch zusätzlich vor schädlichen Umwelteinflüssen geschützt ist.

Alle in der Beschreibung, den nachfolgenden Ausführungsbeispielen und Ansprüchen dargestellten Merkmale können sowohl einzeln als auch in beliebiger Kombination miteinander erfindungswesentlich sein.

## Patentansprüche

1. Modifizierter polymerer Kunststoff umfassend eine transparente Polymermatrix aus Polyvinylbutyral oder Polyethylen, in die ≤ 30 Massenprozent an farbstoffmodifizierten Nanozeolithen derart eingebracht sind, dass daraus bestehende dünne Folien im sichtbaren Bereich des elektromagnetischen Spektrums zunächst transparent sind und nach Bestrahlung mittels UV-Licht bzw. kurzwelligen sichtbaren Lichtes wellenlängenabhängig deutliche Transmissionsverringerungen aufweisen.

2. Modifizierter polymerer Kunststoff gemäß Anspruch 1, **dadurch gekennzeichnet, dass** die Dicke der Folien im Bereich von 1µm bis hin zu einigen Millimetern liegt.

3. Modifizierter polymerer Kunststoff gemäß Anspruch 2, **dadurch gekennzeichnet, dass** dickere Folien ein Laminat mehrerer dünnerer Folien sind.

4. Modifizierter polymerer Kunststoff gemäß Anspruch 1, **dadurch gekennzeichnet, dass** die Polymermatrix aus thermoplastisch verformbaren Polymerstoffen besteht.

## Claims

1. Modified polymer plastic comprising a transparent polymer matrix of polyvinyl butyral or polyethylene in which ≤ 30 weight by weight (w/w) of dye-modified nano-zeolites are added in such a manner that thin films consisting of this composition are firstly transparent in the visible range of the electro-magnetic spectrum and after radiation by UV light or short-wave visible light they show clear transmission reductions depending on the wave length.

2. Modified polymer plastic according to claim 1, wherein the thickness of the films ranges from 1µm to some millimeters.

3. Modified polymer plastic according to claim 2, wherein thicker films are a laminate of several thinner films.

4. Modified polymer plastic according to claim 1, wherein the polymer matrix consists of thermoplastically deformable polymeric materials.

## Revendications

1. Plastique en polymère modifié contenant une matrice en polymère transparente en butyral polyvinylique ou polyéthylène, dans laquelle ≤ 30 pour cents en masse de nanozéolithes modifiées par colorant sont introduits de sorte que des feuilles minces desquelles elles se composent soient transparentes dans la gamme visible du spectre électromagnétique et aient des réductions considérables de la transmission en dépendance de la longueur d'onde après leur irradiation au moyen de la lumière ultraviolette et/ou de la lumière visible de courte longueur d'onde.

2. Plastique en polymère modifié suivant la revendication 1 est **caractérisé en ce que** l'épaisseur des feuilles couvre une gamme allant de 1 µm jusqu'à quelques millimètres.

3. Plastique en polymère modifié suivant la revendication 2 est **caractérisé en ce que** les feuilles plus épaisses sont un aggloméré laminé formé de plusieurs feuilles plus minces.

4. Plastique en polymère modifié suivant la revendication 1 est **caractérisé en ce que** la matrice en polymère se compose des matières polymères usinables de façon thermoplastique.
